# FASCICULE DE BREVET EUROPEEN

(11) **EP 2 283 242 B1**
(45) Date de publication et mention de la délivrance du brevet: **08.07.2015**
(21) Numéro de dépôt: 09746014.1
(22) Date de dépôt: 29.04.2009
(51) Int. Cl.: F16C 19/16, F16C 19/20, F16C 33/58, F16C 33/60, F16C 33/37

(54) **ROULEMENT À SÉPARATEURS SPHÉRIQUES**
WÄLZLAGER MIT KUGELFÖRMIGEN SEPARATOREN
ROLLING BEARING WITH SPHERICAL SEPARATORS

(30) Priorité: 30.04.2008 FR 0852948
(43) Date de publication de la demande: 16.02.2011
(73) Titulaire: Centre National d'Etudes Spatiales, 75001 Paris (FR)
(72) Inventeur: CASTERAS, Christophe, F-31400 Toulouse (FR)
(74) Mandataire: Blot, Philippe Robert Emile
(86) Numéro de dépôt international: PCT/FR2009/050792
(87) Numéro de publication internationale: WO 2009/138695

(56) Documents cités:
- EP-A- 1 022 476
- DE-C- 194 836
- FR-A- 1 301 967
- US-A- 854 505
- US-A- 4 141 607

## Description

La présente invention se rapporte à un dispositif de roulement utilisant des séparateurs sphériques, de type billes. Elle se rapporte en particulier à un roulement à contact oblique, particulièrement à un roulement susceptible d'être utilisé dans l'industrie spatiale.

Il existe des cas, notamment dans l'industrie spatiale, où une lubrification suffisante d'un roulement n'est pas possible. C'est notamment le cas lorsqu'un lubrifiant est susceptible de créer une pollution du système qu'il équipe, par exemple un télescope ou un miroir de changement de visée. C'est aussi le cas lorsque le roulement est en contact avec des milieux chimiques, par exemple dans une pompe à ergols liquides ou une pompe à ammoniac.

Dans d'autres cas, par exemple lorsque le roulement est utilisé pour permettre de faibles oscillations, une lubrification se révèle généralement inefficace.

Dans le cas de roulements à billes non lubrifiés, ou mal lubrifiés, la durée de vie des cages ou des séparateurs de billes, pour lesquels les contacts avec les billes sont essentiellement glissants, se révèle très réduite.

Des séparateurs sphériques, permettent de remplacer les contacts essentiellement glissants des séparateurs généralement utilisés, par des contacts roulants entre billes de roulement et séparateur sphériques. Ceci permet de prolonger la durée de vie des roulements. Ces séparateurs sphériques sont guidés dans une piste auxiliaire, qui leur est propre. Chaque séparateur sphérique roule donc, simultanément et avec jeu, sur la piste et sur deux billes de roulement voisines qu'il sépare.

Dans l'art antérieur, un tel séparateur est disposé de telle sorte que son axe de rotation soit le plus parallèle possible à l'axe de rotation des billes et à l'axe de rotation des bagues (axe de roulement). Cette exigence amène de fortes contraintes d'encombrement et de fabrication des bagues extérieures et intérieures. De plus, du fait des jeux précités que présentent nécessairement les billes et les séparateurs sphériques par rapport à leurs organes de guidage, le cumul de ces jeux peut conduire à des situations où en fonctionnement comme au repos un séparateur sphérique s'échappe latéralement entre deux billes.

Le document EP 1 022 476 décrit un roulement à billes à séparateurs sphériques dans lequel les séparateurs sont en appui sur une piste formée dans un élément solidaire de l'une des deux bagues du roulement. Selon la géométrie de ce roulement, les séparateurs sphériques sont retenus en position entre la piste précitée et l'autre bague.

Du fait des jeux que présentent nécessairement les billes et les séparateurs sphériques, en fonctionnement ces derniers sont amenés nécessairement à venir en appui contre l'autre bague. Hors celle-ci, soit est fixe, soit tourne dans le même sens que les billes, alors que les séparateurs sphériques tournent en sens contraire des billes. Les séparateurs sphériques sont donc en appui sur deux pièces qui ont des composantes de vitesse très différentes suivant une composante d'axe parallèle à l'axe du roulement, ce qui est générateur de glissement, donc de frottement et par conséquent d'usure.

De plus, les séparateurs sphériques sont en contact avec l'autre bague suivant une arête ou une partie conique de celle-ci, c'est-à-dire une surface très réduite qui entraîne des contraintes de Hertz très importantes également facteurs d'usure.

Le document US 854 505 A décrit un roulement à billes comprenant une bague extérieure et une bague intérieure entre lesquelles les billes roulent autour d'un axe de roulement (X1), des séparateurs sphériques pour les billes , et une piste de révolution autour de l'axe de roulement (X1) sur laquelle roulent lesdits séparateurs sphériques. La piste est une gouttière formée dans un élément solidaire ou faisant partie de la bague externe et présente une section sensiblement hémicyclique de diamètre adapté à celui desdits séparateurs sphériques pour recevoir lesdits séparateurs en appui dans des positions où ils sont retenus latéralement et exempts de contact avec la bague interne. Les séparateur présentant un angle de déport radial (A3) inférieur ou égal à 60°, ledit angle (A3) étant mesuré dans un plan radial (P4) entre, d'une part, un segment de droite (D23) reliant des traces (T2,T3) laissées d'un même côté de l'axe de roulement (X1) par les centres respectifs desdites billes et desdits séparateurs dans ledit plan radial et, d'autre part, ledit axe de roulement (X1).

Le but de l'invention est de proposer un roulement à séparateurs sphériques qui ne présente pas les inconvénients des séparateurs sphériques de l'art antérieur et permette, en particulier, d'assurer la retenue des séparateurs sphériques tout en minimisant les frottements.

A cet effet l'invention a pour objet un roulement à billes selon la revendication 1, les séparateurs présentant un angle de déport radial inférieur ou égal à 60°, de préférence à 30°, ledit angle étant mesuré dans un plan radial entre, d'une part, un segment de droite reliant des traces laissées d'un même côté de l'axe de roulement par les centres respectifs desdites billes et dédits séparateurs dans ledit plan radial et, d'autre part, ledit axe de roulement.

Conformément à l'invention, la gouttière de section sensiblement hémicyclique et de diamètre adapté à celui des séparateurs sphériques présente, vis-à-vis des séparateurs, une forme enveloppante qui lui permet tout à la fois :
- d'assurer une fonction de retenue latérale des séparateurs sphériques pour éviter qu'ils ne soient éjectés à l'arrêt ou en fonctionnement sous l'effet des jeux fonctionnels et des forces de gravité et/ou centrifuges,
- d'éviter, pour assurer cette fonction de retenue, le contact des séparateurs avec une autre pièce de vitesse très différente, et
- de minimiser les contraintes de Hertz grâce à la surface conséquente de contact entre les séparateurs sphériques et la gouttière.

Avec le roulement selon l'invention, chaque séparateur sphérique présente une composante de rotation autour d'un axe radial et une composante de rotation autour d'un axe axial de sorte que son axe de rotation instantané varie de manière très marquée et en permanence. Les points de contact du séparateur avec les billes voisines et contre la gouttière se déplacent donc à la surface du séparateur, sans rester sur un même cercle, de sorte que les contacts se font sur une grande surface de contact du séparateur et que l'usure du séparateur s'en trouve réduite. L'usure étant en outre mieux répartie, le séparateur conserve plus longtemps une forme sensiblement sphérique. La durée de vie du roulement en est prolongée.

L'invention concerne également un roulement comportant une ou plusieurs des caractéristiques suivantes considérées seules ou en combinaison :
- l'élément portant la gouttière forme une seule pièce avec ladite bague ou, en variante, est un anneau rapporté et solidaire de ladite bague ;
- le roulement est un roulement à contact oblique.

L'invention vise également l'utilisation d'un roulement tel que défini ci-dessus pour un engin spatial et/ou sans lubrification.

D'autres particularités et avantages de l'invention ressortiront encore de la description ci-après, relative à des exemples non limitatifs.

Aux dessins annexés :
- la figure 1 est une coupe schématique axiale d'un premier mode de réalisation pour un roulement selon l'invention, selon le trait de coupe I-I de la figure 2 ;
- la figure 2 est une coupe transversale du roulement de la figure 1 selon le trait de coupe II-II de la figure 1 ;
- la figure 3 est une demi-coupe axiale, similaire à celle de la figure 1, d'un deuxième mode de réalisation pour un roulement selon l'invention ; et,
- la figure 4 illustre la mesure de l'angle de déport radial ;

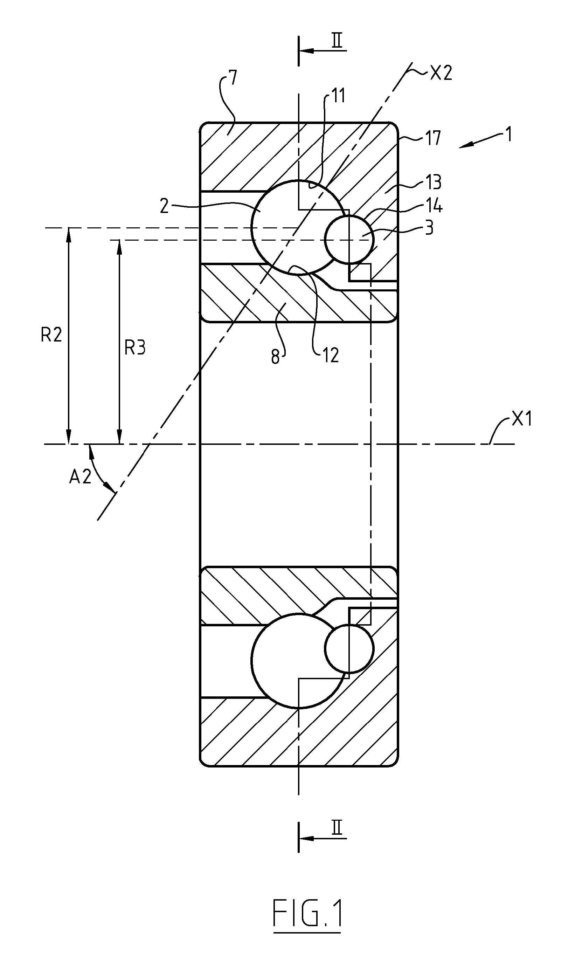

Dans le mode de réalisation illustré à la figure 1, le roulement 1 selon l'invention est un roulement 1 à billes 2. Le roulement est sensiblement symétrique autour d'un axe de roulement X1, longitudinal.

Les billes de roulement sont maintenues à distance l'une de l'autre par des billes de séparation 3. Dans la suite de la description, à fin de simplification, les billes de roulement 2 seront nommées billes 2 et les billes de séparation 3 seront nommées séparateurs 3.

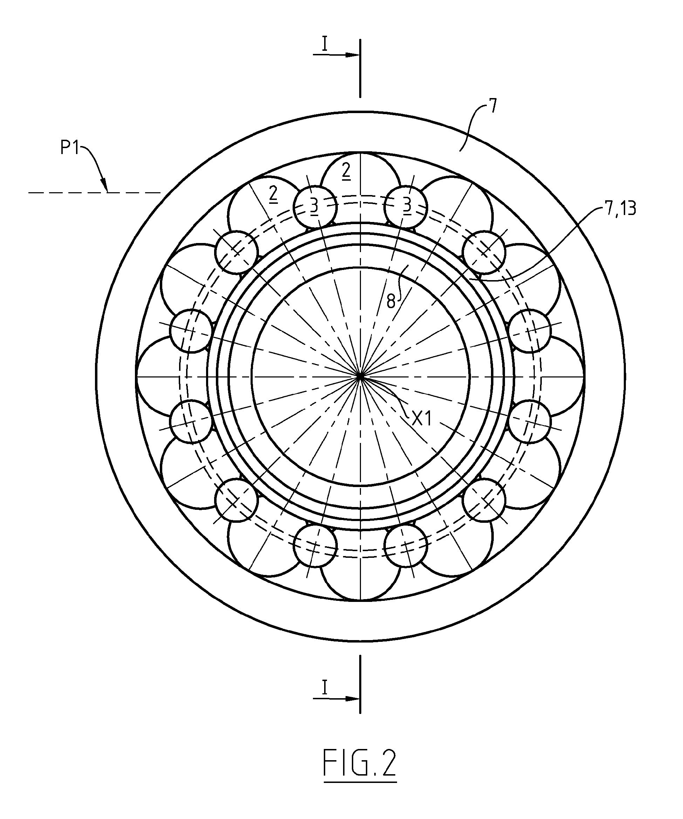

Le plan de la figure 1 est un plan axial, c'est-à-dire comprenant l'axe de roulement X1. Le plan de la figure 1 est un plan médian des deux billes 2 diamétralement opposées illustrées. Les séparateurs 3 illustrés sont en avant du plan de la figure 2 et y sont représentés par projection orthogonale au plan de la figure 1.

Le roulement 1 comprend une bague extérieure 7 et une bague intérieure 8 chacune formant respectivement une piste extérieure 11 et une piste intérieure 12 pour les billes 2. Le roulement 1 est un roulement à contact oblique, c'est-à-dire que les billes de roulement 2 sont en appui sur les pistes selon un axe de contact X2 formant un angle de contact A2 non droit avec l'axe X1 de roulement.

A l'une 17 de ses extrémités axiales, la bague extérieure 7 comprend une extension 13 qui s'étend sensiblement radialement en direction de l'axe X1. Cette extension 13 forme une piste auxiliaire, appelée gouttière 14, pour le roulement des séparateurs 3. La gouttière permet le guidage des séparateurs, et définit leur position relativement à la piste extérieure 11, donc par rapport aux billes que les séparateurs séparent. La gouttière est de révolution autour de l'axe de roulement X1 et de section sensiblement hémicyclique, c'est-à-dire sensiblement en forme de demi-tore.

Le diamètre de la section sensiblement hémicyclique de la gouttière 14 est adapté à celui des séparateurs 3, mais un jeu de fonctionnement est prévu pour le roulement des séparateurs dans la gouttière. Un tel jeu permet notamment d'éviter une hyperstaticité de montage et évite le passage d'efforts de précontrainte ou de chargement du roulement dans les séparateurs.

Une distance radiale R3 entre le centre d'un séparateur 3 et l'axe de roulement X1 est inférieure à une distance radiale R2 entre le centre d'une bille 2 et l'axe de roulement X1.

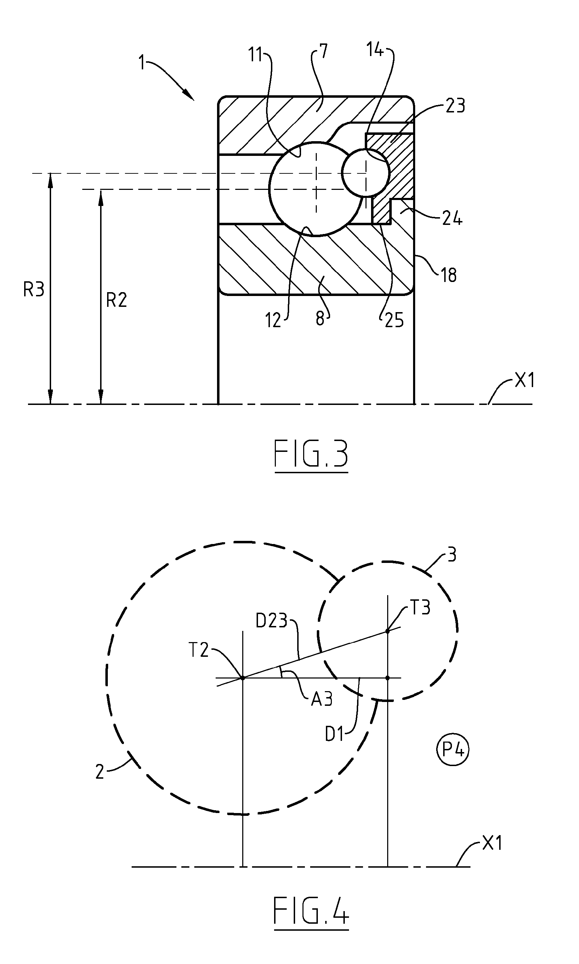

Le mode de réalisation d'un roulement 1, illustré à la figure 3, ne va être décrit qu'en se qu'il diffère de celui illustré aux figures 1 et 2. Les éléments similaires entre les modes de réalisation des figures 1 et 3 portent la même référence.

Dans l'exemple illustré à la figure 3, il n'y a pas d'excroissance 13 portant la gouttière 14. Dans cet exemple, la gouttière est portée par un anneau 23. L'anneau est fixé par emboîtement serré ou par collage sur la bague intérieure 8, de sorte que la bague intérieure 8 et l'anneau 23 sont solidaires en rotation, dans un mode de fonctionnement normal du roulement 1.

La bague intérieure 8 comprend, à l'une 18 de ses extrémités axiales, un épaulement 24 coopérant avec un épaulement complémentaire 25 de l'anneau 23, de sorte que l'anneau ne peut pas se déplacer au-delà de l'extrémité axiale 18, notamment sous un effort de contact entre les billes et les séparateurs.

La gouttière 14 est disposée sur l'anneau 23, de sorte que la distance radiale R3 entre le centre d'un séparateur 3 et l'axe de roulement X1 est supérieure à la distance radiale R2 entre le centre d'une bille 2 et l'axe de roulement X1.

La figure 4 illustre la mesure d'un angle A3 de déport radial des séparateurs 3 relativement aux billes 2, définit lorsque le roulement est en fonctionnement. Le plan de la figure 4 est un plan radial P4, c'est-à-dire un plan comprenant l'axe de roulement X1.

A la figure 4, les points T2 et T3 illustrent les traces laissées dans le plan P4, respectivement par les centres des billes 3 et des séparateurs 4 lorsqu'ils franchissent le plan P4, dans sa partie située « au-dessus » de l'axe de roulement X1. Les traces laissées par les périphéries respectives des billes et des séparateurs sont représentées en traits interrompus, sous les références respectives 2 et 3.

L'angle A3 est mesuré entre un segment de droite D23 reliant les traces T2 et T3, et l'axe X1 ou, comme illustré à la figure 4, une droite D1 parallèle à l'axe X1 dans le plan P4.

Selon l'invention, le terme « angle de déport » se rapporte à l'angle de déport réel, c'est-à-dire celui qui s'établit lors du fonctionnement du roulement, en fonction des jeux et des forces, notamment centrifuges, appliquées aux billes et aux séparateurs. Cette définition de l'angle de déport est valable pour tout le document. Un angle de déport théorique est un angle qui ne tiendrait notamment pas compte de jeux existant entre billes et séparateurs. Idéalement, et cependant toujours dans le cadre défini par les revendications, on recherche un angle de déport radial sensiblement nul.

Le déport A3, peut être en direction de l'axe X1, tel qu'illustré aux figure 1 et, ou dans la direction opposée, tel qu'illustré aux figures 3 et 4.

Le déport axial prononcé des séparateurs permet de réduire notablement l'encombrement radial du roulement. Aussi, le montage du roulement est facilité par rapport aux solutions antérieures, puisque la gouttière ne se trouve plus à proximité immédiate de la bague opposée à celle qui porte la gouttière, et que les séparateurs peuvent être introduits axialement dans la gouttière.

En particulier, une excroissance telle qu'illustrée dans le premier mode de réalisation peut aussi être portée par la bague intérieure, plutôt que par la bague extérieure. Aussi, un anneau tel qu'illustré au deuxième mode de réalisation peut être fixé à la bague extérieure plutôt qu'à la bague intérieure.

De préférence, au moins la piste de roulement de la bague qui porte la gouttière sera constituée d'une gorge, de préférence une gorge profonde.

Selon le mode de réalisation préféré, la gouttière est portée par la bague intérieure. Des études montrent que dans cette configuration, la fabrication est facilitée et le fonctionnement amélioré.

L'invention n'est pas limitée aux roulements à contact oblique, mais peut aussi être appliquée à des roulements droits.

Au lieu de ne comporter qu'une gouttière, un roulement selon l'invention, peut comprendre deux gouttières, chacune d'un côté, de sorte que chaque paire de billes de roulement voisines est séparée par une paire de séparateurs sphériques disposés de part et d'autre, axialement, de la paire de billes.

Il peut ne pas y avoir d'épaulements complémentaires associés à un anneau portant la gouttière. En effet, la fixation de l'anneau sur la bague qui le porte, par emboîtement ou par collage, peut être suffisante pour reprendre les efforts axiaux.

## Revendications

1. Roulement (1) à billes (2) comprenant
- une bague extérieure (7) et une bague intérieure (8) entre lesquelles les billes (2) roulent autour d'un axe de roulement (X1),
- des séparateurs sphériques (3) pour les billes (2), et
- une piste (14) de révolution autour de l'axe de roulement (X1) sur laquelle roulent lesdits séparateurs sphériques (3),
ladite piste étant une gouttière (14) formée dans un élément (13 ; 23) solidaire en rotation ou faisant partie de l'une desdites bagues (7 ; 8) et présentant une section sensiblement hémicyclique de diamètre adapté à celui desdits séparateurs sphériques (3) pour recevoir lesdits séparateurs en appui dans des positions où ils sont retenus latéralement et exempts de contact avec l'autre desdites bagues (8 ; 7), **caractérisé en ce que**
lesdits séparateurs présentent un angle de déport radial (A3) inférieur ou égal à 60° et non nul, ledit angle (A3) étant mesuré dans un plan radial (P4) entre, d'une part, un segment de droite (D23) reliant des traces (T2,T3) laissées d'un même côté de l'axe de roulement (X1) par les centres respectifs desdites billes (2) et desdits séparateurs (3) dans ledit plan radial et, d'autre part, ledit axe de roulement (X1), l'angle (A3) étant orienté par rapport à l'axe de roulement (X1) dans le sens antihoraire lorsque l'élément (23) est solidaire en rotation de la bague intérieure (8), et dans le sens horaire lorsque l'élément (23) est solidaire en rotation de la bague extérieure (7).

2. Roulement selon la revendication 1, **caractérisé en ce que** l'angle de déport est inférieur ou égal à 30°.

3. Roulement selon l'une quelconque des revendications 1 et 2, **caractérisé en ce que** ledit élément (13) forme une seule pièce avec ladite bague (7 ; 8).

4. Roulement selon l'une quelconque des revendications 1 et 2, **caractérisé en ce que** ledit élément est un anneau (23) rapporté et solidaire de ladite bague (7; 8).

5. Roulement selon l'une des revendications précédentes, **caractérisé en ce qu'**il est un roulement à contact (A2) oblique.

6. Utilisation d'un roulement selon l'une des revendications 1 à 5 pour un engin spatial.

7. Utilisation d'un roulement selon l'une des revendications 1 à 5 sans lubrification.

## Patentansprüche

1. Kugellager (1, 2) umfassend
- einen Außenring (7) und einen Innenring (8), zwischen denen die Kugeln (2) um eine Laufachse (X1) abrollen,
- sphärische Trennelemente (3) für die Kugeln (2), und
- eine Umlaufbahn (14) um die Laufachse (X1), auf der die sphärischen Trennelemente (3) abrollen,
wobei die Bahn eine Rinne (14) ist, die in einem Element (13; 23) ausgebildet ist, das drehfest ist oder Teil eines der Ringe (7; 8) ist, und einen im Wesentlichen halbkreisförmigen Querschnitt mit einem Durchmesser aufweist, der an denjenigen der sphärischen Trennelemente (3) angepasst ist, um die Trennelemente in Abstützung in Positionen aufzunehmen, in denen sie seitlich gehalten sind und frei von einem Kontakt mit dem anderen der Ringe (8; 7) sind, **dadurch gekennzeichnet, dass**
die Trennelemente einen Versatzwinkel (A3) kleiner als oder gleich 60° und nicht null aufweisen, wobei der Winkel (A3) in einer radialen Ebene (P4) einerseits zwischen einem Geradensegment (D23), das die Spuren (T2, T3) verbinden, die von den jeweiligen Mitten der Kugeln (2) und der Trennelemente (3) in der radialen Ebene an einer selben Seite der Umlaufachse (X1) hinterlassen werden, und andererseits der Umlaufachse (X1) gemessen wird, wobei der Winkel (A3) in Bezug auf die Umlaufachse (X1) in Gegenuhrzeigerrichtung, wenn das Element drehfest mit dem Innenring (8) verbunden ist, und in Uhrzeigerrichtung orientiert ist, wenn das Element (23) drehfest mit dem Außenring (7) verbunden ist.

2. Lager nach Anspruch 1, **dadurch gekennzeichnet, dass** der Versatzwinkel kleiner als oder gleich 30° ist.

3. Lager nach einem beliebigen der Ansprüche 1 und 2, **dadurch gekennzeichnet, dass** das Element (13) ein einziges Teil mit dem Ring (7; 8) bildet.

4. Lager nach einem beliebigen der Ansprüche 1 und 2, **dadurch gekennzeichnet, dass** das Element ein Ring (23) ist, der angesetzt und fest mit dem Ring (7; 8) verbunden ist.

5. Lager nach einem der vorhergehenden Ansprüche, **dadurch gekennzeichnet, dass** es ein Schrägkugellager (A2) ist.

6. Verwendung eines Lagers nach einem der Ansprüche 1 bis 5 für ein Raumfahrzeug.

7. Verwendung eines Lagers nach einem der Ansprüche 1 bis 5 ohne Schmierung.

## Claims

1. A ball (2) rolling bearing (1) comprising
- an outer ring (7) and an inner ring (8) between which the balls (2) roll around an axis of rolling (X1),
- spherical separators (3) for the balls (2), and
- a raceway (14) of revolution about the axis of rolling (X1) and along which said spherical separators (3) roll,
said raceway is a channel section (14) formed in an element (13; 23) secured to or forming part of one of said rings (7; 8) and having a substantially semi-cyclic cross section of a diameter suited to that of said spherical separators (3) so as to accommodate said separators resting in positions in which they are retained laterally and free of contact with the other of said rings (8; 7), **characterized in that**
said separators having a radial non-zero offset angle (A3) smaller than or equal to 60°, said angle (A3) being measured in a radial plane (P4) between, on one hand, a straight segment (D23) connecting marks (T2, T3) left on a same side of the axis of rolling (X1) by the respective centers of said balls (2) and said separators (3) in said radial plane and, on the other hand, said axis of rolling (X1), and on the other hand, the axis of rolling (X1), the angle (A3) being orientated in respect to said axis of rolling (X1) in a counter-clockwise sense when the element (23) is secured to the inner ring (8) and in a clockwise sense when the element (23) is secured to the outer ring (7).

2. The rolling bearing according to claim 2, **characterized in that** said offset angle is less than or equal to 30°.

3. The rolling bearing according to any one of claims 1 and 2, **characterized in that** said element (13) forms a single piece with said ring (7; 8).

4. The rolling bearing according to any one of claims 1 and 2, **characterized in that** said element is an annulus (23) fastened and secured to said ring (7; 8).

5. The rolling bearing according to one of the preceding claims, **characterized in that** it is a rolling bearing with oblique contact (A2).

6. A use of a rolling bearing according to one of claims 1 to 5 for a spacecraft.

7. A use of a rolling bearing according to one of claims 1 to 5 without lubrication.
